Europäisches Patentamt

(19) European Patent Office

Office européen des brevets

(11) Numéro de publication : **0 309 321 B1**

(12) FASCICULE DE BREVET EUROPEEN

(45) Date de publication du fascicule du brevet :
26.06.91 Bulletin 91/26

(51) Int. Cl.⁵ : **B23D 55/02**

(21) Numéro de dépôt : 88402330.0

(22) Date de dépôt : 15.09.88

(54) **Scie à ruban à lame inclinable.**

(30) Priorité : 16.09.87 FR 8712839

(43) Date de publication de la demande :
29.03.89 Bulletin 89/13

(45) Mention de la délivrance du brevet :
26.06.91 Bulletin 91/26

(84) Etats contractants désignés :
AT BE DE ES GB IT NL SE

(56) Documents cités :
FR-A- 2 442 704
US-A- 4 503 743

(73) Titulaire : **LUREM S.A.**
**La Haute Chapelle B.P. no 1**
**F-61700 Domfront (FR)**

(72) Inventeur : **de Varreux,Jean-Loup**
**3 rue Jeanne d'Arc**
**F-78100 Saint Germain En Laye (FR)**

(74) Mandataire : **Polus, Camille et al**
**c/o Cabinet Lavoix 2, Place d'Estienne d'Orves**
**F-75441 Paris Cedex 09 (FR)**

**Description**

La présente invention concerne une scie à ruban dont la lame de scie est inclinable par rapport à la table de sciage.

Les scies à ruban existantes possèdent actuellement une lame de scie verticale fixe et une table de sciage inclinable autour d'un axe horizontal. Une telle réalisation en rend l'utilisation difficile, voir dangereuse pour des angles de sciage relativement importants.

On connait cependant par le document FR-A-2 442 704 une scie à ruban du type comprenant une table, un bâti supportant des poulies de guidage de la lame, un moteur entraînant la lame à l'aide d'une courroie et de poulies d'entraînement. Le bâti est monté pivotant autour d'un axe parallèle à celui des poulies et porté par un coulisseau monté dans une glissière prévue sous la table de sciage. Par ailleurs, le bâti est logé dans un carter comportant une lumière en arc de cercle centrée sur l'axe de pivotement du bâti. Cette lumière est traversée par une vis de blocage solidaire d'un bras porté par les pieds de table, et s'étendant à l'extérieur des limites de la table de sciage selon l'axe longitudinal de cette table.

Le point de blocage du bâti est situé extérieurement par rapport à la table de sciage, ce qui entraîne une mauvaise stabilité de l'ensemble. Par ailleurs, la présence d'un seul point de blocage est insuffisante pour assurer une sécurité efficace lors du fonctionnement de l'ensemble.

Pour remédier à ces inconvénients, l'invention a pour but de fournir une scie à ruban, qui soit compacte et stable, possédant en outre deux points de blocage situés à la verticale de la table de sciage.

A cet effet, l'invention a pour objet :
- une scie à ruban comportant un socle supportant une table de sciage, un cadre supportant des poulies de guidage et des moyens d'entraînement d'une lame de scie et monté pivotant sur le socle autour d'un axe horizontal, le cadre étant logé dans un carter dont une paroi comporte une première lumière, un organe de blocage du cadre en position angulaire étant relié au socle et traversant la première lumière, caractérisée en ce que l'organe de blocage traverse une deuxième lumière située en vis-à-vis de la première lumière, ménagée dans une paroi de socle adjacente à la paroi de carter et s'étendant à la verticale de la table de sciage.

Un tel dispositif permet donc d'obtenir un point de blocage situé sur une paroi verticale du socle et situé à la verticale de la table de sciage quelle que soit la position angulaire du carter. De plus, on obtient ainsi une scie à ruban plus compacte et plus stable que dans l'art antérieur.

Selon d'autres caractéristiques :
- la deuxième lumière est rectiligne, la première lumière étant incurvée ;
- la première lumière est en forme de secteur de cercle et l'organe de blocage est monté articulé sur la paroi de carter autour d'un axe horizontal passant par le centre géométrique de la première lumière en forme de secteur de cercle ;
- la paroi de socle comporte un bord supérieur découpé en arc de cercle dont le centre géométrique est sur l'axe de pivotement du carter, et la paroi de carter comporte un deuxième organe de blocage situé entre l'axe de pivotement du cadre et la lumière rectiligne ;
- le deuxième organe de blocage est constitué d'un organe de serrage fixé sur la paroi de carter pour coopérer avec le bord supérieur de la paroi de socle.

Cette disposition fournit un deuxième élément de blocage situé à la verticale de la table de sciage.

Selon des caractéristiques supplémentaires :
- la paroi du socle comporte des trous situés sur un cercle ayant son centre sur l'axe de pivotement du cadre, les trous étant destinés à coopérer avec un élément d'indexation rétractable solidaire de la paroi de carter pour positionner le cadre selon des positions angulaires prédéterminées ;
- la lumière rectiligne fait un angle aigu avec le plan d'appui du socle et en ce que la paroi de socle comporte des renforts dans ses parties pleines ;
- la scie comporte en outre un vérin d'équilibrage relié d'une part au socle et d'autre part au carter ;
- le carter comporte une paroi opposée à la paroi munie de la première lumière constituée par une porte.

L'invention va être décrite plus en détail ci-après en se référant aux dessins annexés, donnés uniquement à titre d'exemples et dans lesquels :
- la Figure 1 est une vue schématique en perspective d'une scie à ruban selon l'invention, la lame de scie étant inclinée latéralement par rapport à la table de sciage ;
- la Figure 2 est une vue partielle en élévation de la scie, la lame étant perpendiculaire à la table, et sur laquelle on a représenté en traits mixtes une position inclinée du carter ;
- la Figure 3 est une vue partielle en coupe selon l'axe 3-3 de la Figure 2 ;
- la Figure 4 est une vue partielle en coupe selon l'axe 4-4 de la Figure 2 ;
- la Figure 5 est une vue de la paroi de carter adjacente au socle ; et,
- la Figure 6 est une vue de la paroi de carter opposée à la paroi représentée à la Figure 5.

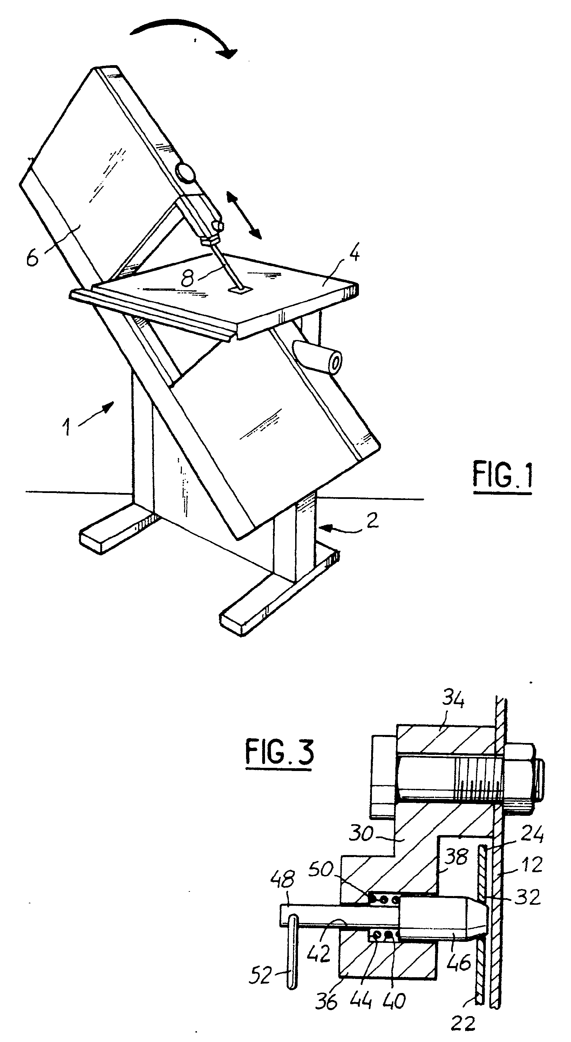

Sur la Figure 1, on a représenté schématiquement une scie à ruban 1 selon l'invention, comportant un socle 2 supportant une table de sciage 4 et sur lequel est articulé un carter 6 formant cadre de machine en forme de col de cygne. Ce carter 6 supporte, comme nous le verrons ultérieurement, les moyens d'entraînement d'une lame de scie 8 en forme de ruban et traversant la table de sciage 4 approximativement en son centre.

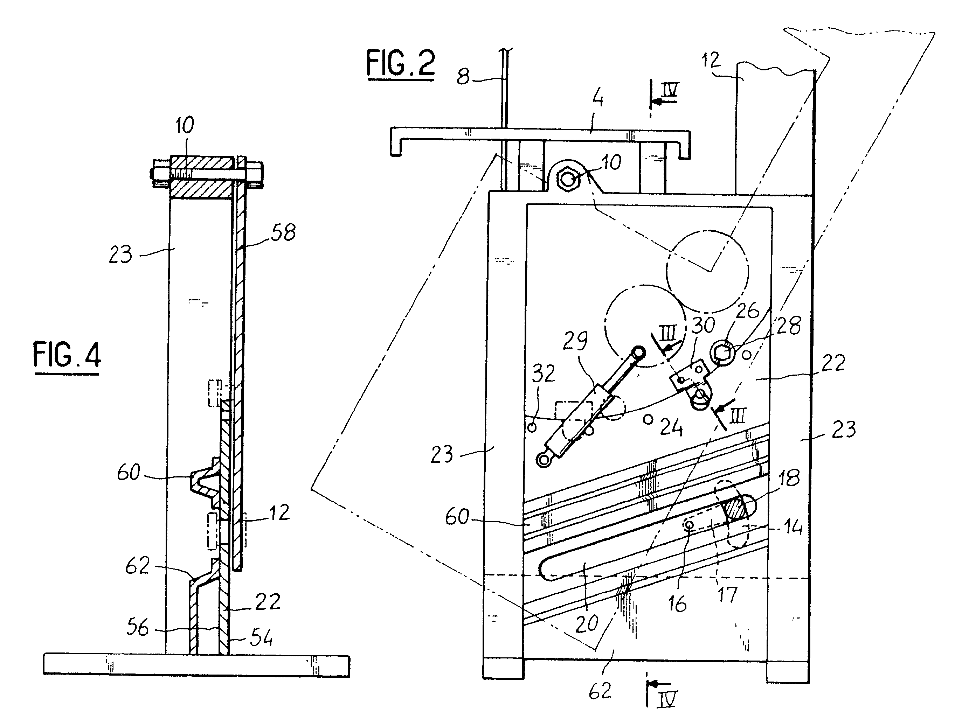

Sur la Figure 2, on constate que le carter 6 est monté pivotant sur le socle 2 autour d'un axe horizontal 10 situé sous la table de sciage 4 à proximité de celle-ci et éloigné du passage de la lame de scie 8. Le carter 6 possède une paroi plane 12 adjacente au socle dans laquelle est découpée une première lumière 14. Cette lumière 14 est en forme d'arc de cercle dont le centre géométrique est situé sur un axe 16 autour duquel est articulé un levier 17 sur lequel est fixée par une de ses extrémités une tige filetée 18 traversant la lumière 14 pour faire saillie au travers d'une deuxième lumière 20 découpée dans une paroi 22 du socle. Cette tige filetée 18 est destinée à recevoir un écrou 19 (voir Figure 4) pour bloquer par serrage la paroi de carter 12 par rapport à la paroi de socle 22. Cette deuxième lumière 20 est rectiligne et légèrement inclinée en formant un angle aigu avec l'horizontale.

La paroi de socle 22 s'étend entre deux piliers 23 de section rectangulaire et comporte un bord supérieur 24 découpé en arc de cercle centré sur l'axe 10.

Un deuxième organe de blocage 26 solidaire de la paroi de carter 12 est situé à proximité du bord supérieur 24 de la paroi de socle 22 et possède une partie filetée s'étendant au-delà de la paroi de socle 22.

Sur cette partie filetée se visse un écrou 28 qui va également permettre de bloquer par serrage la paroi de carter 12 par rapport à la paroi de socle 22.

Ce deuxième organe de blocage 26 est ainsi situé entre l'axe de pivotement 10 du carter et la deuxième lumière 20.

Il est prévu un vérin d'équilibrage 29 de type usuel qui possède une extrémité solidaire de la paroi de socle 22, et dont l'autre extrémité est solidaire de la paroi de carter 12.

Un élément d'indexation 30 fixé sur la paroi de carter 12 coopère avec des trous 32 percés dans la paroi de socle 22. Ces trous 32 sont disposés à proximité du bord supérieur 24 de la paroi de socle 22 et leurs axes sont situés sur un cercle également centré sur l'axe 10 de pivotement du carter 6.

Cet élément d'indexation 30 est représenté en coupe sur la Figure 3. En se reportant à celle-ci, on constate qu'il comporte une partie supérieure 34 fixée par tout moyen connu sur la paroi de carter 12. Cette partie 34 est située au-dessus du bord supérieur 24 et à proximité de celui-ci et s'étend depuis la paroi de carter 12 jusqu'au delà de la paroi de socle 22.

La partie inférieure 36 de l'élément d'indexation 30 comporte une face 38 plane située en vis-à-vis de l'extrémité supérieure 24 et des trous 32 de la paroi de socle 22.

Dans cette face 38 est percé un premier alésage 40 dont le fond est percé d'un alésage 42 de diamètre plus faible pour former un épaulement 44. L'axe de ces alésages est situé sur un cercle également centré sur l'axe 10 et passant par les axes des trous 32.

L'alésage 40 reçoit de manière coulissante un téton cylindrique prolongé à une extrémité par une tige 48 traversant l'alésage 42. L'autre extrémité du téton possède une forme tronconique destinée à faciliter son introduction dans un trou 32.

Un ressort 50 s'appuyant sur l'épaulement 44 pousse le téton 46 contre la paroi de socle 22 et lorsque l'axe de l'alésage 38 et du trou 32 sont alignés, le téton 46 pénètre dans le trou 32 immobilisant ainsi la paroi de carter dans une position déterminée correspondant à des positions angulaires précises par exemple 15°, 20° ou autres.

La tige 48 comporte à son extrémité libre un dispositif 52 connu en soi destiné à assurer une bonne préhension pour retirer le téton 46 du trou 32 et l'éloigner de la paroi de socle 22 à l'encontre de la sollicitation du ressort 50.

En se reportant maintenant à la Figure 4, on constate que la paroi de socle 22 comporte une face 54 en vis-à-vis de la paroi de carter 12. La face 54 de la paroi de socle 22 est située dans un plan vertical passant par les parois 58 des piliers 23 faisant face à la paroi de carter 12.

La face 56 de la paroi de socle 22 opposée à la face 54 est munie de renforts de rigidité 60 et 62.

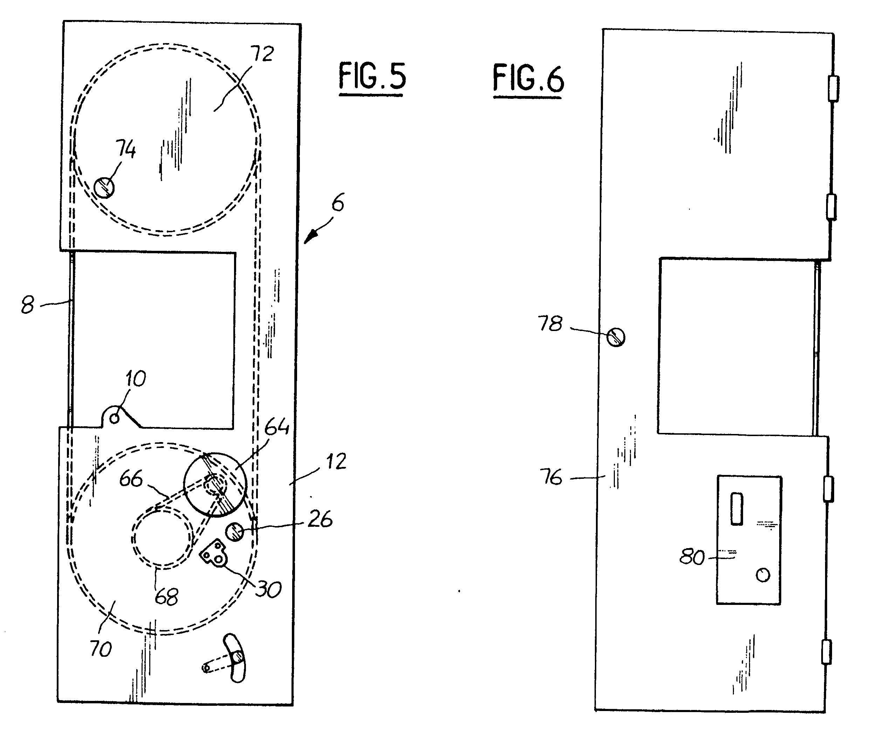

En se reportant à la Figure 5 qui représente la paroi de carter 12, on voit que cette dernière supporte un moteur 64 faisant saillie à partir de cette paroi de carter 12 vers la paroi de socle 22. Le moteur entraîne à l'aide d'une courroie 66 une poulie d'entraînement 68 solidaire d'une poulie de guidage ou volant 70, cet ensemble étant situé à la partie inférieure du carter 6 en col de cygne. La partie supérieure du carter 6 comporte un volant 72 et la lame de scie 8 est tendue sur ces deux volants à l'aide d'un dispositif de tension non représenté. Un bouton de préhension 74 est prévu sur la partie supérieure de la paroi de carter 12 pour pouvoir mettre en oeuvre la force nécessaire à la rotation du carter 6 autour de l'axe 10.

La paroi de carter opposée à la paroi 12 constitue une porte 76 montée pivotante sur une arête du côté discontinu du carter en forme de col de cygne et comporte un bouton 78 d'ouverture et de fermeture. Cette porte 76 supporte également le panneau de commande 80 de la scie à ruban 1.

Après avoir arrêté par sécurité le mouvement de la lame de scie 8 et à partir d'une position quelconque de la lame de scie 8 : on dévisse l'écrou 19 du premier organe de blocage 18 et l'écrou 28 du deuxième organe de blocage 26. On tire ensuite sur l'élément 52 de la tige 48 pour rétracter le téton 46 à l'encontre du ressort 50. On fait ensuite pivoter, à l'aide du bouton 74, le carter 6 autour de l'axe 10 pour l'amener dans la position voulue. On relâche alors l'élément 52 de sorte que si la position angulaire du carter correspond à une position prédéterminée par l'un des trous 32, le téton 46 vient se positionner dans le trou 32 correspondant. Pour une position intermédiaire entre deux trous 32, le téton 46 vient en butée contre la face 56 de la paroi de socle 22. Il suffit alors de serrer les écrous des organes de blocage 26 et 18 pour bloquer en position le carter 6 par rapport au socle 2. La scie à ruban est alors apte à scier selon l'angle d'inclinaison désiré par rapport à la table de sciage.

On obtient ainsi un dispositif ne comportant que deux volants logés dans un carter compact. De plus, la fiabilité du blocage est accrue par la présence de deux organes de blocage.

Les points de liaison et de transmission des efforts entre le socle et le carter sont l'axe de pivotement du carter et les deux organes de blocage. Ces trois points sont situés à peu près au centre de l'assise du socle à la verticale de la table de sciage et non en porte-à-faux comme dans la technique antérieure, ce qui accroit la stabilité de la scie à ruban.

## Revendications

1. Scie à ruban (1) comportant un socle (2) supportant une table de sciage (4), un cadre supportant des poulies de guidage et des moyens d'entraînement d'une lame de scie (8) et monté pivotant sur le socle (2) autour d'un axe horizontal (10), le cadre étant logé dans un carter (6) dont une paroi (12) comporte une première lumière (14), un organe de blocage (18) du cadre en position angulaire étant relié au socle et traversant la première lumière, caractérisée en ce que l'organe de blocage (18) traverse une deuxième lumière (20) située en vis-à-vis de la première lumière (14), ménagée dans une paroi de socle (22) adjacente à la paroi de carter (12) et s'étendant à la verticale de la table de sciage.

2. Scie à ruban selon la revendication 1, caractérisée en ce que la deuxième lumière (20) est rectiligne, la première lumière (14) étant incurvée.

3. Scie à ruban selon la revendication 2, caractérisée en ce que la première lumière (14) est en forme de secteur de cercle et l'organe de blocage (18) est monté articulé sur la paroi de carter autour d'un axe horizontal passant par le centre géométrique de la première lumière (14) en forme de secteur de cercle.

4. Scie à ruban selon la revendication 1, caractérisée en ce que la paroi de socle comporte un bord supérieur (24) découpé en arc de cercle dont le centre géométrique est sur l'axe (10) de pivotement du carter, et en ce que la paroi de carter comporte un deuxième organe de blocage (26) situé entre l'axe (10) de pivotement du cadre et la lumière rectiligne (20).

5. Scie à ruban selon la revendication 4, caractérisée en ce que le deuxième organe de blocage (26) est constitué d'un organe de serrage fixé sur la paroi de carter (12) pour coopérer avec le bord supérieur (24) de la paroi de socle (22).

6. Scie à ruban selon les revendications 1, 2 ou 3, caractérisée en ce que la paroi de socle comporte des trous (32) situés sur un cercle ayant son centre sur l'axe (10) de pivotement du cadre, les trous étant destinés à coopérer avec un élément d'indexation (30) rétractable solidaire de la paroi de carter (12) pour positionner le cadre selon des positions angulaires prédéterminées.

7. Scie à ruban selon la revendication 2, caractérisée en ce que la lumière rectiligne (20) fait un angle aigu avec le plan d'appui du socle et en ce que la paroi de socle comporte des renforts (60, 62) dans ses parties pleines.

8. Scie à ruban selon la revendication 1, caractérisée en qu'elle comporte en outre un vérin (29) d'équilibrage relié d'une part au socle et d'autre part au carter.

9. Scie à ruban selon la revendication 1, caractérisée en ce que le carter (6) comporte une paroi opposée à la paroi (12) munie de la première lumière (14) constituée par une porte (76).

## Claims

1. Band saw (1) comprising a base (2) supporting a sawing table (4), a frame supporting guide rollers and drive means for a saw blade (8) and being mounted in pivoting manner on the base (2) around a horizontal axis (10), the frame being housed in a housing (6), a wall (12) of which has a first elongated hole (14), with a locking element (18) for locking the frame in an angular position being connected to the base and passing through the first elongated hole, **characterised in that** the locking element (18) passes through a second elongated hole (20) which is situated facing the first elongated hole (14), is arranged in a base wall (22) adjacent to the housing wall (12), and extends vertically in relation to the sawing table.

2. Band saw according to claim 1, **characterised in that** the second elongated hole (20) is rectilinear, the first elongated hole (14) curving inwards.

3. Band saw according claim 2, **characterised in that** the first elongated hole (14) is in the form of a sector of a circle and the locking element (18) is mounted in hinged manner on the housing wall around a horizontal axis passing through the geometric centre of the first elongated hole (14) in the form of a sector of a circle.

4. Band saw according to claim 1, **characterised in that** the base wall comprises an upper edge (24) cut in an arc of a circle, the geometric centre of which is on the pivoting axis (10) of the housing, and in that the housing wall comprises a second locking element (26) situated between the pivoting axis (10) of the frame and the rectilinear elongated hole (20).

5. Band saw according to claim 4, **characterised in that** the second locking element (26) is formed by a clamping element attached to the housing wall (12) for cooperating with the upper edge (24) of the base wall (22).

6. Band saw according to claim 1, 2 or 3, **characterised in that** the base wall has holes (32) situated on a circle with its centre on the pivoting axis (10) of the frame, the holes being for cooperating with a retractable indexing element (30) rigidly attached to the housing wall (12) for positioning the frame according to predetermined angular positions.

7. Band saw according to claim 2, **characterised in that** the rectilinear elongated hole (20) forms an acute angle with the plane of support of the base, and in that the base wall has reinforcing pieces (60, 62) in its solid parts.

8. Band saw according to claim 1, **characterised in that** it further comprises a balancing jack (29) connected on the one hand to the base and on the other hand to the housing.

9. Band saw according to claim 1, **characterised in that** the housing (6) comprises a wall opposite the wall (12) provided with the first elongated hole (14), the said wall opposite the wall (12) being formed by a door (76).


**Ansprüche**

1. Bandsäge (1) mit einem Sockel (2), der einen Sägetisch (4) trägt, einem Rahmen, der Führungsrollen und Antriebseinrichtungen für ein Sägeblatt (8) trägt und um eine waagerechte Achse (10) schwenkbar auf dem Sockel montiert ist, welcher Rahmen in einem Gehäuse (6) untergebracht ist, dessen eine Wand (12) einen ersten Schlitz (14) aufweist, einem Blockierungsorgan (18) zum Blockieren des Rahmens in einer Winkelposition zum Sockel, das den ersten Schlitz durchläuft, dadurch **gekennzeichnet,** daß das Blockierungsorgan (18) einen zweiten Schlitz (20) durchläuft, der dem ersten Schlitz (14) gegenüber liegt und in eine Wand des Sockels (22) angrenzend an die Wand des Gehäuses (12) eingearbeiter ist und sich senkrecht zum Sägetisch erstreckt.

2. Bandsäge nach Anspruch 1, dadurch **gekennzeichnet,** daß der zweite Schlitz (20) geradlinig ist, und daß der ersten Schlitz (14) bogenförmig verläuft.

3. Bandsäge nach Anspruch 2, dadurch **gekennzeichnet,** daß der erste Schlitz (14) die Form eines Kreisausschnitts aufweist, und daß das Blockierungsorgan (18) an der Wand des Gehäuses um eine waagerechte Achse drehbar montiert ist, die durch die geometrische Mitte des ersten, kreisbogenförmigen Schlitzes (14) verläuft.

4. Bandsäge nach Anspruch 1, dadurch **gekenn-**

zeichnet, daß die Wand des Sockels einen oberen Rand (24) aufweist, der in der Form eines Kreisbogens abgeschnitten ist, dessen geometrische Mitte in der Schwenkasche des Gehäuses liegt, und daß die Wand des Gehäuses ein zweites Blockierungsorgan (26) aufweist, das zwischen der schwenkachse des Rahmens und dem geradlinigen Schlitz (20) liegt.

5. Bandsäge nach Anpruch 4, dadurch **gekennzeichnet,** daß das zweite Blockierungsorgan (26) ein Klemmorgan ist, das an der Wand des Gehäuses (12) befestigt ist und mit dem oberen Rand (24) der Wand des Sockels (22) zusammenwirkt.

6. Bandsäge nach den Anprüchen 1, 2 oder 3, dadurch **gekennzeichnet,** daß die Wand des Sockels Löcher (32) aufweist, die auf einem Kreis liegen, dessen Mittelpunkt in der Schwenkachse (10) des Rahmens liegt, welche Löcher mit einem zurückziehbaren Index-Element (30) zusammenwirken, das an der Wand zum Einstellen des Rahmens in den vorgegebenen Winkelpositionen angebracht ist.

7. Bandsäge nach Anspruch 2, dadurch **gekennzeichnet,** daß der geradlinige Schlitz (20) einen spitzen Winkel mit Auflageebene des Sockels bildet, und daß die Wand des Sockels Verstärkungen (60, 62) in den vollflächigen Bereichen aufweist.

8. Bandsäge nach Anspruch 1, dadurch **gekennzeichnet,** daß die Bandsäge im übrigen eine Gleichgewichts-Stelleinrichtung (29) aufweist, die einerseits mit dem Sockel und andererseits mit dem Gehäuse verbunden ist.

9. Bandsäge nach Anspruch 1, dadurch **gekennzeichnet,** daß das Gehäuse (6) eine der den Schlitz (14) aufweisenden Wand (12) gegenüberliegende Wand aufweist, die durch eine Tür gebildet wird.

FIG.1

FIG.3

EP 0 309 321 B1

6

FIG.4

FIG.2

EP 0 309 321 B1

FIG.5    FIG.6

EP 0 309 321 B1